# EUROPEAN PATENT APPLICATION

(11) **EP 2 060 990 A2**
(43) Date of publication of application: **20.05.2009**
(21) Application number: 08168302.1
(22) Date of filing: 04.11.2008
(51) Int. Cl.: G06F 21/00

(54) **Rights sharing system and method for digital rights management**

(30) Priority: 07.11.2007 KR 20070112912
(71) Applicant: Samsung Electro-Mechanics Co., Ltd., Suwon-city, Kyungki-do 442-370 (KR)
(72) Inventor: Ham, Dong Eup, Suwon-si Gyeonggi-do (KR)
(74) Representative: Harrison Goddard Foote

(57) **Abstract**

A rights sharing system and method for digital rights management (DRM) is provided. The system and method allow an inaccessible terminal, which cannot directly access a content providing server that provides a license, to receive only a key value for playing back DRM content from a terminal having a license and to play back the DRM content. Therefore, the system and method enable the inaccessible terminal to play back a DRM content, without mounting a DRM agent to acquire a license thereto.

## Description

### BACKGROUND OF THE INVENTION

### 1. Field of the Invention:

The present invention relates to Digital Rights Management (DRM). More particularly, the present invention relates to a rights sharing system and method for DRM that enables an inaccessible terminal, which cannot access a content providing server, to share the DRM rights stored in an accessible terminal that can access the content providing server.

### 2. Description of the Related Art:

Digital Rights Management (DRM) refers to technology that manages and protects the intellectual property rights of digital contents using encryption technology. DRM technology serves to allow a variety of contents to be transmitted safely from a Content Provider (CP) to users and prevents the contents from being used or copied illegally. DRM technology can protect information throughout the entire process of generation, distribution, use and disuse. DRM technology can also protect use and rights according to a user's off-line and on-line rights.

In a portable terminal, in order to use contents to which DRM technology is applied, which is hereinafter referred to as 'DRM contents,' the portable terminal first accesses a content providing server and then downloads a corresponding DRM content, meta data for the DRM content, and a license from the server. The term meta data refers to data that includes information about the DRM contents. The term license refers to data that specifies a decoding key, used for decoding encrypted contents, and content use rights (e.g. the number of playbacks, the period of use, etc.). After the DRM content and license are downloaded and stored in a portable terminal through the process, the user can use the DRM content.

Since the DRM content and DRM rights are provided from a particular content providing sever, the terminal must use an additional communication module to access the server.

Therefore, despite a conventional inaccessible terminal that cannot access a content providing server having a module for playing back DRM content, it cannot play back a DRM content since it cannot access the server.

### SUMMARY OF THE INVENTION

An aspect of the present invention is to address at least the above-mentioned problems and/or disadvantages and to provide at least the advantages described below. Accordingly, an aspect of the present invention is to provide a rights sharing system and method for Digital Rights Management (DRM) that enables an inaccessible terminal, which cannot access a content providing server, to share the DRM content or the DRM content license with an accessible terminal, which can access the content providing server, and to play back the DRM content.

In accordance with an aspect of the present invention, a rights sharing system for digital rights management (DRM) is provided. The system includes an inaccessible terminal that cannot directly access a content providing server, which provides a license, for storing a DRM content and a playback module used for playing back the DRM content, and an terminal for decoding a license corresponding to the DRM content that the inaccessible terminal intended to play back, for extracting a key value for playing back the DRM content, and for transmitting the extracted key value to the inaccessible terminal. The inaccessible terminal receives the key value from the terminal and plays back the DRM content.

In accordance with another aspect of the present invention, a rights sharing system for digital rights management (DRM) is provided. The system includes an inaccessible terminal that cannot directly access a content providing server, which provides a license, for storing a DRM content and a playback module used for playing back the DRM content, and a terminal for decoding a license corresponding to the DRM content that the inaccessible terminal intended to play back, for extracting a key value for playing back the DRM content, for setting license rights for the key value, for generating a sublicense including the key value and the license rights, and for transmitting the sublicense to the inaccessible terminal. Here, the inaccessible terminal receives the sublicense from the terminal and plays back the DRM content.

In accordance with another aspect of the present invention, a rights sharing method for digital rights management (DRM) that plays back a DRM content in an inaccessible terminal that cannot directly access a content providing server that provides a license is provided. The method comprises generating a playback request of a DRM content, determining whether a key value for playing back the DRM content is stored, establishing a communication channel with a terminal using a short-range communication module, if the key value is not stored; requesting a key value corresponding to the DRM content from the terminal; and playing back the DRM content using the key value received from the terminal.

In accordance with yet another aspect of the present invention, a rights sharing method for digital rights management (DRM) is provided. The method includes generating a request for playing back a DRM content, determining whether a sublicense is stored, the sublicense including a key value for playing back the DRM content and license update information corresponding to a key value, establishing, if the sublicense is not stored, a communication channel with a terminal using a short-range communication module, requesting a sublicense corresponding to the DRM content from the terminal and playing back the DRM content using a key value included in the sublicense received from the terminal.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a schematic view illustrating a rights sharing system for Digital Rights Management (DRM) according to an exemplary embodiment of the present invention;

FIG. 2 is a schematic block diagram illustrating an inaccessible terminal according to an exemplary embodiment of the present invention;

FIG. 3 is a schematic block diagram illustrating an accessible terminal according to an exemplary embodiment of the present invention;

FIG. 4 is a signal flowchart describing communication between elements in a rights sharing system for DRM, according to an exemplary embodiment of the present invention;

FIG. 5 is a flowchart describing operations of an inaccessible terminal, according to an exemplary embodiment of the present invention;

FIG. 6 is a flowchart describing operations of an accessible terminal, according to an exemplary embodiment of the present invention; and

FIG. 7 is a signal flowchart describing a license update process in a rights sharing system, according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms or words described and used in the following description and the claims should not be limited by a general or lexical meaning, but instead should be analyzed as a meaning and a concept through which the inventor defines and describes the present invention, to comply with the idea of the present invention. Therefore, one skilled in the art will understand that the embodiments disclosed in the description and configurations illustrated in the drawings are only exemplary embodiments, and that there may be various modifications, alterations, and equivalents thereof to replace the embodiments at the time of filing this application.

For example, an inaccessible terminal according to an exemplary embodiment of the present invention refers to a terminal that can play back Digital Rights Management (DRM) contents but cannot directly access a content providing server. That is, an inaccessible terminal according to an exemplary embodiment of the present invention denotes a terminal that does not include a communication module for accessing a content providing server. Examples of the inaccessible terminal are a Moving Picture experts group-1 audio layer 3 (MP3) dedicated player, a Portable Multimedia Player (PMP), a Portable Sound Player (PSP) a file player, etc. The inaccessible terminal must include a communication module that can communicate with an accessible terminal. The communication module may be a short-range communication module that can establish a short-range communication channel and transmit/receive signals to/from other modules located within a certain area. Examples of the short-range communication module include a Bluetooth communication module, a Zigbee communication module, an Ultra Wide Band (UWB) communication module, an InfraRed (IR) communication module, a Universal Asynchronous Receiver/Transmitter (UART) communication module, a Universal Serial Bus (USB) communication module, etc.

Although the accessible terminal according to an exemplary embodiment of the present invention is described based on a mobile communication terminal, it should be understood that the present invention is not so limited. That is, the accessible terminal of the present invention refers to any terminal that can download a license from a content providing server. It will also be appreciated that the accessible terminal can be applied to all the information communication devices, multimedia devices, and their applications, such as, a digital broadcasting terminal, a Personal Digital Assistant (PDA), a smart phone, Third Generation (3G) terminals, such as an International Mobile Telecommunication 2000 (IMT-2000) terminal, a Wideband Code Division Multiple Access (WCDMA) terminal, a Global System for Mobile communication/General Packet Radio Service (GSM/GPRS) terminal, a Universal Mobile Telecommunication Service (UMTS) terminal, etc.

In the following description, a content providing server that can provide DRM contents or a license is referred to a Rights Issuer (RI) server.

An item used for an accessible terminal to play back a DRM content is referred to as a "license." An item used for an inaccessible terminal to play back a DRM content is referred to as a "sublicense." In an exemplary implementation, the sublicense includes a "key value" or a "key value" and "update information for license rights."

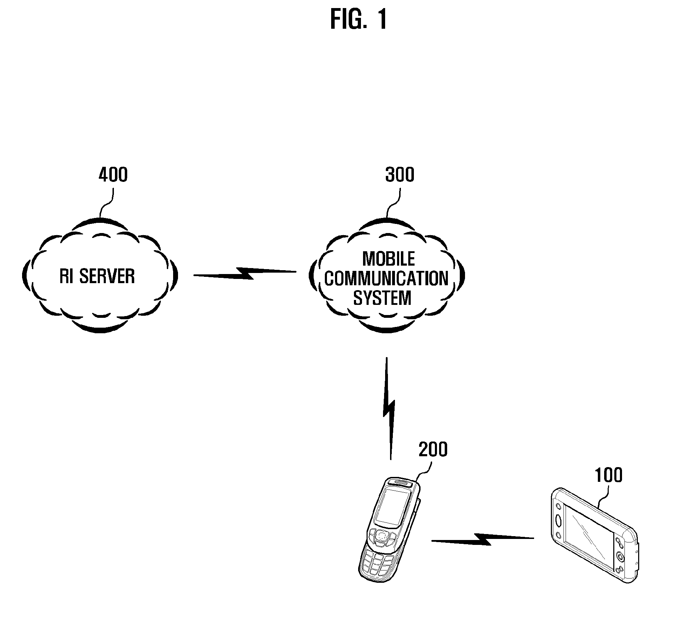

FIG. 1 is a schematic view illustrating a rights sharing system for DRM according to an exemplary embodiment of the present invention. In the following description, an accessible terminal 200 is explained based on a mobile communication terminal. A DRM content may be acquired by a variety of methods, such as broadcasting, point-to-point transmitting, downloading from other terminals, etc. Furthermore, DRM content may be stored in an accessible terminal 100 at the time the terminal is manufactured. In the following description, it is assumed that the inaccessible terminal 100 has DRM content stored in its memory.

Referring to FIG. 1, the rights sharing system for DRM according to an exemplary embodiment of the present invention includes an inaccessible terminal 100, an accessible terminal 200, a mobile communication system 300 and an RI server 400.

When the inaccessible terminal 100 intends to play back a DRM content (DRM_MO) that requires a license for playback, the rights sharing system for DRM establishes a communication channel between the accessible terminal and the inaccessible terminal, so that the inaccessible terminal 100 shares the license corresponding to the DRM content (DRM_MO) with the accessible terminal 200 and plays back the DRM content (DRM_MO). If the accessible terminal 200 has not stored a license corresponding to the DRM content (DRM_MO) requested by the inaccessible terminal 100, the rights sharing system provides a means and a network through which the accessible terminal 200 can access the RI server 400 and download the corresponding license therefrom. Each of the elements in the rights sharing system is explained in detail below.

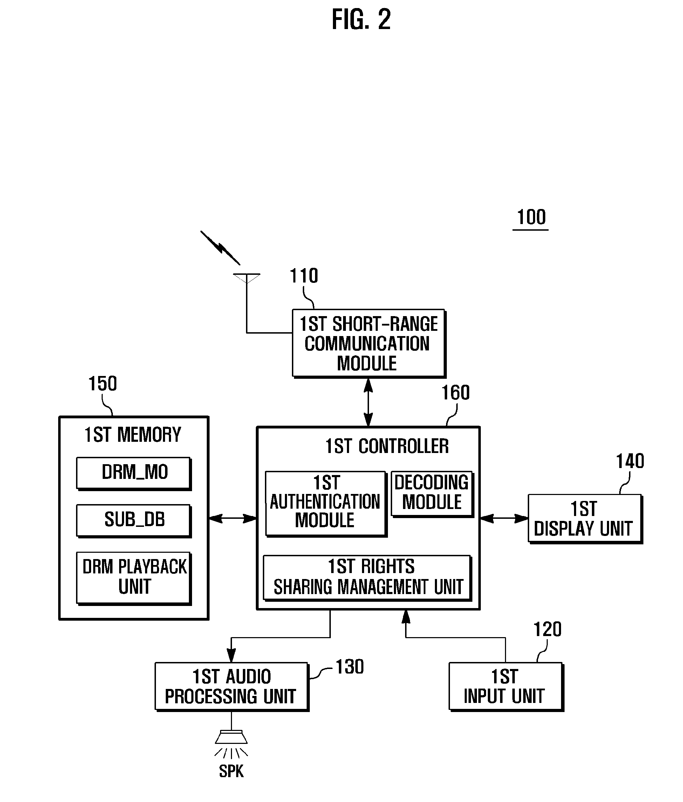

The inaccessible terminal 100 refers to a terminal that can play back a DRM content but cannot directly acquire a license from a content providing server. This inaccessible terminal 100 may be an MP3 player that can play back audio files having a license, and a PSP or a PMP that can play back video files having a license. The inaccessible terminal 100 can share or acquire a license for playing back a DRM content with or from the accessible terminal 200. To this end, the inaccessible terminal 100 can establish a short-range communication channel with the accessible terminal 200. The inaccessible terminal 100 will be described further below, with reference to FIG. 2.

The accessible terminal 200 establishes a short-range communication channel with the inaccessible terminal 100. Through the channel, the accessible terminal 200 shares a license requested by the inaccessible terminal 100 with the inaccessible terminal 100 or processes the license to a sublicense and then transmits the sublicense to the inaccessible terminal 100. The sublicense can be decoded by the inaccessible terminal 100 and may include information that updates license consumption according to the playback of the inaccessible terminal 100. That is, the sublicense may include a key value for playing back DRM content and information for updating a license according to playback. When the accessible terminal 200 does not store a license requested by the inaccessible terminal 100, it accesses the RI server 400 via the mobile communication system 300 and requests and receives the license from the RI server 400. To this end, the accessible terminal 200 may further include a web browser. In that case, when accessing the RI server 400, the accessible terminal 200 can display web pages provided from the RI server 400 through the web browser.

When the accessible terminal 200 is implemented by a mobile communication terminal, the mobile communication system 300 provides a network to access the RI server 400. The mobile communication system 300 includes a base station that establishes a wireless communication channel with the accessible terminal 200, a base station controller for controlling the base station, a Wireless Access Point (WAP) gateway allowing for access to a mobile switching center and the RI server 400, and a billing server for billing the accessible terminal 200 for a charge according to the access of the accessible terminal 200. The mobile communication system 300 may further include a message service server that supports a variety of services for the accessible terminal 200, such as message services, multi-media message services, etc., a home location register for supporting user location service, a visitor location register, etc.

The RI server 400 can provide the accessible terminal 200 with web pages, according to whether the accessible terminal 200 is accessed, and transmit a particular license requested by the accessible terminal 200 to the accessible terminal 200. The RI server 400 may include a billing server that can bill the accessible terminal 200 for a charge according to transmission of a particular license. The RI server 400 may bill the accessible terminal 200 for the charge, through a billing server of the mobile communication system 300. The RI server 400 can broadcast DRM contents or transmit them to the connected accessible terminal 200 on demand. It is preferable that the DRM contents have a structure that is suitable for allowing them to be transmitted between accessible terminals 200, between the accessible terminal 200 and the inaccessible terminal 100, and between inaccessible terminals 100.

As described above, the rights sharing system for DRM according to an exemplary embodiment of the present invention can allow the inaccessible terminal 100, which cannot directly access the RI server 400, to download a license through the accessible terminal 200 or to share a license, possessed by the accessible terminal 200, with the accessible terminal 200.

FIG. 2 is a schematic block diagram illustrating an inaccessible terminal 100 according to an exemplary embodiment of the present invention.

Referring to FIG. 2, the inaccessible terminal 100 includes a 1^{st} short-range communication module 110, a 1^{st} input unit 120, a 1^{st} audio processing unit 130, a 1^{st} display unit 140, a 1^{st} memory 150, and a 1^{st} controller 160.

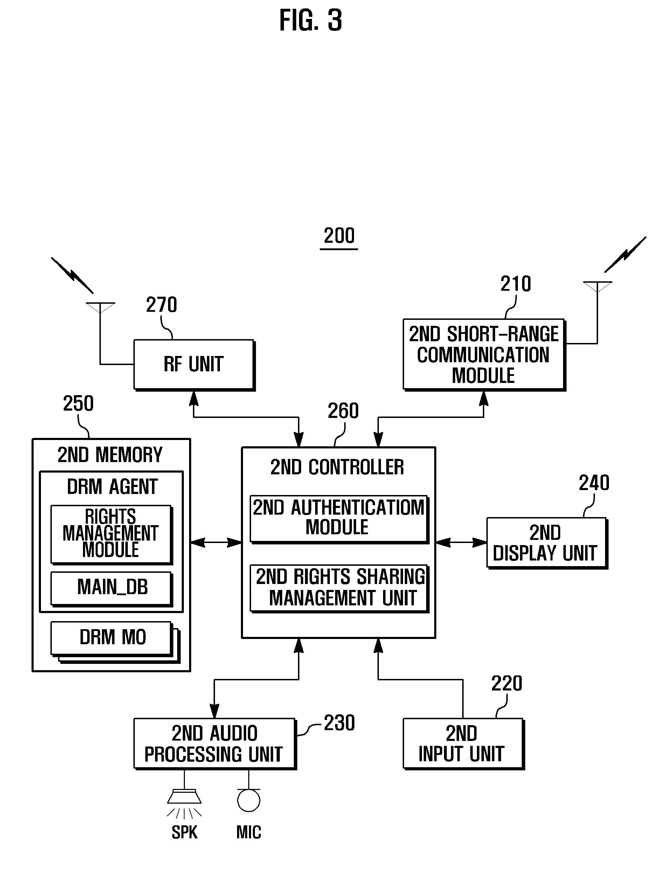

The 1^{st} short-range communication module 110 establishes a short-range communication channel with the accessible terminal 200. The 1^{st} short-range communication module 110 may be implemented by a module that can establish a communication channel with a 2^{nd} short-range communication module 210 (illustrated in FIG. 3) of the accessible terminal 200. For example, either of the 1^{st} short-range communication module 110 and the 2^{nd} short-range communication module 210 may be a Bluetooth communication module, a Zigbee communication module, a UWB communication module, an infrared (IR) communication module, a serial communication module using a wire, etc. The 1^{st} short-range communication module 110 transmits a license request message to the accessible terminal 200, receives a license or a sublicense corresponding to the license request message therefrom, and outputs the license or a sublicense to the 1^{st} controller 160. If the license is shared by the inaccessible terminal 100 and the accessible terminal 200 and it is necessary to update the license as a license for a particular DRM content is used, the 1^{st} short-range communication module 110 transmits a license update message to the accessible terminal 200.

The 1^{st} input unit 120 generates an input signal for playing back a DRM content in the inaccessible terminal 100, for example, a selection signal for selecting a file from the contents listed and stored in the 1^{st} memory 150, a signal for playing back the selected content file, and a signal for terminating the content file playback, and then outputs them to the 1^{st} controller 160. The 1^{st} input unit 120 also generates an input signal for establishing a short-range communication channel with the accessible terminal 200, for example, an input signal for activating the 1^{st} short-range communication module, a signal for selecting the accessible terminal 200 by scanning peripheral devices if it has a Bluetooth module, and a signal for requesting a license for a DRM content, intended to be played back, from the selected terminal, and then outputs them to the 1^{st} controller 160.

The 1^{st} audio processing unit 130 plays back the content stored in the 1^{st} memory 150 and outputs audio signals through its speaker SPK. When the 1^{st} audio processing unit 130 plays back a file selected from the DRM contents stored in the 1^{st} memory 150, in which the selected DRM content file does not have a license, it may output a corresponding message indicating that the selected DRM content file does not have a license. The 1^{st} audio processing unit 130 can also output an alarm signal if it establishes a short-range communication channel with the accessible terminal 200, and another alarm signal if it receives a license, requested by the accessible terminal 200, from the accessible terminal 200.

The 1^{st} display unit 140 can output a variety of images according to the capabilities of the inaccessible terminal 100. For example, if the inaccessible terminal 100 is implemented as an MP3 player, the 1^{st} display unit 140 may display at least one of a file name, a file size, a progressive bar for playing back a file, a playback time, a particular logo, an image related to the file, etc. If the inaccessible terminal 100 is a PSP or a PMP, the 1^{st} display unit 140 may play back a video file stored in the 1^{st} memory 150. If the content is protected by DRM, the 1^{st} display unit 140 can display an index indicating that the content is set by DRM. When a short-range communication channel is established, the 1^{st} display unit 140 can display peripheral devices on the list, which are detected by the scanning operation. When the inaccessible terminal 100 receives a license or a sublicense from the accessible terminal 200, the display unit 140 can display a reception confirmation message.

The 1^{st} memory 150 stores an Operating System (OS) for operating the inaccessible terminal 100, and application programs that can activate a playback module for playing back contents, stored in the memory, and the 1^{st} short-range communication module 110. In particular, the 1^{st} memory 150 stores DRM contents and may be configured to include a DRM playback unit for playing back DRM content (DRM_MO) and a sub Data Base (sub DB) for managing a license necessary for playing back the DRM content (DRM_MO). When the inaccessible terminal 100 receives a sublicense from the accessible terminal 200, the sub DB stores it and also updates it as the DRM content (DRM_MO) is played back. That is, the sub DB receives a sublicense from the accessible terminal 200 and stores it, where the sublicense includes a key value, necessary for the playback of the DRM content (DRM_MO), and license rights update information according to the playback of the DRM content. The sub DB outputs the stored key value to the 1^{st} controller 160 when a corresponding DRM content (DRM_MO) is played back. If license update is required as DRM content (DRM_MO) is played back, the sub DB updates the stored license rights. When the inaccessible terminal 100 shares a license with the accessible terminal 200, the sub DB receives only a key value for playing back a DRM content (DRM_MO) from the accessible terminal 200 and stores it.

The 1^{st} controller 160 controls operations of the inaccessible terminal 100 and signal flows between the elements included therein. That is, the 1^{st} controller 160 controls operations necessary to play back a DRM content (DRM_MO) stored in the 1^{st} memory 150, according to an input signal output from the 1^{st} input unit 120. When the inaccessible terminal 100 does not have a license for playing back the DRM content (DRM_MO), the 1^{st} controller 160 controls the 1^{st} short-range communication module 110 in response to the input signal of the 1^{st} input unit 120 in order to request the license from the accessible terminal 200. The 1^{st} controller 160 includes a 1^{st} authentication module, a decoding module, and a 1^{st} rights sharing management unit in order to receive a proper license or a sublicense from the accessible terminal 200.

The 1^{st} authentication module transmits authentication information about the inaccessible terminal 100 to the accessible terminal 200 when the inaccessible terminal 100 activates the 1^{st} short-range communication module 110 to share a license with the accessible terminal 200. If the accessible terminal 200 identifies the received authentication information and transmits a confirmation message to the 1^{st} authentication module, the 1^{st} authentication module notifies the 1^{st} controller 160 that the authentication of the inaccessible terminal 100 has been confirmed by the accessible terminal 200.

The 1^{st} rights sharing management unit generates a license sharing request message or a sublicense request message, which corresponds to the selected DRM content (DRM_MO), and transmits it to the accessible terminal 200 through the 1^{st} short-range communication module 110. When the inaccessible terminal 100 receives a key value according to the license sharing request or a sublicense according to the sublicense request message from the accessible terminal 200, the 1^{st} rights sharing management unit outputs it to the 1^{st} memory 150 and thus the 1^{st} memory 150 stores it. The 1^{st} rights sharing management unit transmits license update information to the sub DB stored in the 1^{st} memory 150 or to the accessible terminal 200 through the 1^{st} short-range communication module 110. The license update information is generated while a DRM content (DRM_MO), to which a license is set by the decoding module, is decoded and played back or after the DRM content (DRM_MO) has been played back. When the playback of the DRM content (DRM_MO) is terminated or the operation of the DRM content playback module is terminated, the 1^{st} rights sharing management unit can delete a key value that is not included in the sublicense.

The decoding module reads a key value for playing back a selected DRM content from the 1^{st} memory 150 and then decodes the code for the DRM content. The decoding module outputs the decoded data to the 1^{st} display unit 140 or the 1^{st} audio processing unit 130.

As described above, when the inaccessible terminal 100 plays back a DRM content (DRM_MO), if it does not have a license corresponding thereto, it receives only a key value necessary for decoding the DRM content (DRM_MO) or license rights that are changed according to license update information, and stores and manages the key or the license rights. That is, since the inaccessible terminal 100 can manage only a minimum amount of information necessary for playing back DRM content (DRM_MO), it does not require any additional element for playing back a DRM content (DRM_MO). For example, the inaccessible terminal 100 does not need a DRM agent module for accessing an RI server 400 and downloading a license nor a license DB for managing licenses. Therefore, the inaccessible terminal 100 according to an exemplary embodiment of the present invention can play back DRM content (DRM_MO) by using and managing only a minimum number of elements.

FIG. 3 is a schematic block diagram illustrating an accessible terminal 200 according to an exemplary embodiment of the present invention.

Referring to FIG. 3, the accessible terminal 200 includes the 2^{nd} short-range communication module 210, a 2^{nd} input unit 220, a 2^{nd} audio processing unit 230, a 2^{nd} display unit 240, a 2^{nd} memory 250, a 2^{nd} controller 260, and an RF unit 270.

The 2^{nd} short-range communication module 210 establishes a short-range communication channel with the 1^{st} short-range communication module 110 of the inaccessible terminal 100. It is preferable that the 1^{st} and 2^{nd} short-range communication modules 110 and 220 are implemented by a similar communication module. For example, if the 1^{st} short-range communication module 110 is a Bluetooth communication module, the 2^{nd} short-range communication module 210 is also a Bluetooth communication module. The 2^{nd} short-range communication module 210 receives messages from the inaccessible terminal 100, for example, a license sharing request message, a sublicense request message, etc., and then outputs them to the 2^{nd} controller 260. When the accessible terminal 200 shares a license with the inaccessible terminal 100, the 2^{nd} short-range communication module 210 receives a license update message from the inaccessible terminal 100 and outputs it to the 2^{nd} controller 260.

The 2^{nd} input unit 220 includes a plurality of input keys for inputting numerical or character information and a plurality of function keys for setting various functions. Exemplary function keys include direction keys, side keys, and short keys, etc. Selection of a particular function key or a defined combination of function keys executes a particular function. The 2^{nd} input unit 220 generates key signals, related to user's settings and function control of the accessible terminal 200, and outputs them to the 2^{nd} controller 260. In particular, the 2^{nd} input unit 220 generates input signals and then outputs them to the 2^{nd} controller 260, where the input signals include a signal for accessing a content providing server to download a license (DRM_RO), a signal for selecting at least one DRM content (DRM_MO) stored in the 2^{nd} memory 250, and a signal for controlling the playback of the selected DRM content (DRM_MO).

The 2^{nd} audio processing unit 230 plays back audio signals necessary for a call, such as a voice message, etc., through a speaker (SPK) or inputs audio signals received by a microphone (MIC), such as a voice message, etc., to the 2^{nd} controller 260. In particular, when the DRM content (DRM_MO) is played back, the 2^{nd} audio processing unit 230 can play back an audio component included in the DRM content (DRM_MO).

The 2^{nd} display unit 240 displays information, input by a user or output to the user, and a variety of menus for the accessible terminal 200. That is, it can display a variety of screens according to the use of the accessible terminal 200, for example, a standby screen, a menu screen, a message writing screen, a call screen, etc. The 2^{nd} display unit 240 can be implemented by a liquid crystal display (LCD). When the LCD is implemented with a touch screen, the 2^{nd} display unit 240 may be included in an input means. In particular, the 2^{nd} display unit 240 can display a screen showing the establishment of a communication channel with the 1^{st} short-range communication module 110. The 2^{nd} display unit 240 can also display messages transmitted from the inaccessible terminal 100, for example, an authentication request message, a license sharing request message, a sublicense request message, etc. When the accessible terminal 200 does not store a license, requested by the inaccessible terminal 100, in the 2^{nd} memory 250, the 2^{nd} display unit 240 can display an alarm message corresponding thereto. The 2^{nd} display unit 240 can display a screen showing the access to the RI server 400 to download a particular license and screens showing the download of a DRM content (DRM_MO) and a license (DRM_RO). When the accessible terminal 200 shares a license with the inaccessible terminal 100 and receives a license update message from the inaccessible terminal 100, the 2^{nd} display unit 240 can display a message corresponding thereto.

The 2^{nd} memory 250 stores a DRM content (DRM_MO) and a license (DRM_RO) restricting the playback rights of a DRM content (DRM_MO). The 2^{nd} memory 250 stores a playback module for playing back a DRM content (DRM_MO), and a DRM agent for managing a license (DRM_RO). The 2^{nd} memory 250 may be divided into a program area and a data area.

The program area stores an operating system (OS) for operating the accessible terminal 200, a module for playing back a DRM content (DRM_MO), and applications programs providing optional functions of the accessible terminal 200, for example, a camera function, a audio sound playback function, an image or moving image playback function, etc. The program area also stores a DRM agent for downloading and managing a license (DRM_RO) from the RI server 400. The DRM agent includes a main DB that stores a license (DRM_RO) and a rights management module that manages rights update information for a license (DRM_RO) stored in the main DB. When the accessible terminal 200 accesses the RI server 400, the DRM agent is activated, performs an authentication confirmation process with the RI server 400, for example, a user authentication process based on Public Key Infrastructure (PKI), and decodes the license (DRM_RO) provided by the RI server 400. The main DB stores the license (DRM_RO) that the DRM agent accesses from the RI server and downloads therefrom. The rights management module generates a sublicense using the license (DRM_RO) stored in the main DB. That is, the rights management module generates a sublicense that includes a key value, can be used by the inaccessible terminal 100, and license update information. The rights management module can generate a sublicense that includes all rights or partial rights of a particular license. For example, if the rights of a license downloaded from the RI server 400 permit 100 playbacks, the rights management module can generate a sublicense with a portion of the rights of 100 playbacks, for example, the right for playing back 50 playbacks. In addition, if the license is generated for the right of playback for 10 days, the rights management module can generate a sublicense having the right for playback for at least a portion of 10 days, for example, 3 days.

The data area stores data generated as the accessible terminal 200 is used. It stores a DRM content (DRM_MO), a license (DRM_RO) for playing back the DRM content (DRM_MO), a sublicense, etc. It also stores images or moving images, captured by a camera as one of the optional functions of the accessible terminal 200, phone book data, audio data, information corresponding to contents or user data, etc.

If the accessible terminal 200 is a mobile communication terminal, the RF unit 270 can establish a communication channel with a base station to perform a video call or a voice call between the terminals or wirelessly transmit user data to an external other terminal. The RF unit 270 can perform a series of communications, such as transmission and reception of contents and control signals related to the contents, associating with the RI server 400. The RF unit 270 includes an RF transmitter for up-converting the frequency of transmitted signals and amplifying the transmitted signals and an RF receiver for low-noise amplifying of received RF signals and down-converting the frequency of the received RF signals. In particular, the RF unit 270 can download a DRM content (DRM_MO) and a license (DRM_RO) for playing back the DRM content (DRM_MO) from the RI server 400, according to the control of the 2^{nd} controller 260.

The 2^{nd} controller 260 controls the operations of the accessible terminal 200 and signal flows between the elements included therein. It includes a modem and a codec that process data stored in the 2^{nd} memory 250 and a voice call and data that are received by the RF unit 270. In particular, the 2^{nd} controller 260 establishes a short-range communication channel with the inaccessible terminal 100 and controls license transmission according to a request from the inaccessible terminal 100, i.e., a license sharing request or a sublicense request. To this end, it includes a 2^{nd} authentication module and a 2^{nd} rights sharing management.

More specifically, when the inaccessible terminal 100 requests the establishment of a short-range communication channel with the accessible terminal 200 in order to share a license, the 2^{nd} controller 260 establishes the short-range communication channel using the 2^{nd} short-range communication module 210. If an authentication request message is transmitted from the inaccessible terminal 100, the 2^{nd} controller 260 determines whether authentication information included in the authentication request message is valid using the 2^{nd} authentication module. That is, the 2^{nd} authentication module ascertains authentication information and then determines whether to permit the inaccessible terminal 100. If the authentication information is valid, the 2^{nd} authentication module transmits the authentication confirmation message to the inaccessible terminal 100. When the accessible terminal 200 receives a license sharing request message for playing back a particular DRM content (DRM_MO) from the inaccessible terminal 100, the 2^{nd} rights sharing management unit determines whether a license (DRM_RO) corresponding to the received license sharing request message is stored in the 2^{nd} memory 250. When a license (DRM_RO) is stored in the 2^{nd} memory 250, the 2^{nd} rights sharing management unit extracts a key value of the license (DRM_RO) and transmits it to the inaccessible terminal 100. When the 2^{nd} rights sharing management unit maintains the short-range communication channel and receives a license update message according to the playback of the DRM content (DRM_MO) from the inaccessible terminal 100, it updates a license (DRM_RO) stored in the main DB of the 2^{nd} memory 250. If the inaccessible terminal 100 terminates the DRM playback module, the 2^{nd} rights sharing management unit generates a control signal for deleting a previously transmitted key value of the license (DRM_RO) and then transmits it to the inaccessible terminal 100.

When the accessible terminal 200 receives a sublicense request message from the inaccessible terminal 100, the 2^{nd} rights sharing management unit activates the rights management module of the 2^{nd} memory 250 and determines whether a license (DRM_RO) corresponding to the sublicense is stored in the 2^{nd} memory 250. If a license (DRM_RO) is stored in the 2^{nd} memory 250, the rights management module generates a sublicense based on the corresponding license (DRM_RO). The sublicense may include only a key value for playing back DRM content (DRM_MO) and license rights update information. The 2^{nd} rights sharing management unit transmits the sublicense, generated by the rights management module, to the inaccessible terminal 100 through the 2^{nd} short-range communication module 210. If a license (DRM_RO) corresponding to the sublicense is not stored in the 2^{nd} memory 250, the 2^{nd} rights sharing management unit displays a message indicating that the license (DRM_RO) is not stored and determines whether to download it from the RI server 400. When a signal corresponding to a downloading operation is generated by the 2^{nd} input unit 220, the 2^{nd} rights sharing management unit accesses the RI server 400 through the RF unit 270. When a connection is established, the 2^{nd} rights sharing management unit requests a license (DRM_RO), which corresponds to the sublicense requested by the inaccessible terminal 100, from the RI server 400. When the corresponding license (DRM_RO) is received from the RI server 400, the 2^{nd} rights sharing management unit stores it in the 2^{nd} memory 250 and generates a sublicense. The license rights included in the sublicense may be set within the rights of the license (DRM_RO) stored in the 2^{nd} memory 250. A portion of the rights within the rights of license (DRM_RO) can be determined by an amount of rights requested by the inaccessible terminal 100 or by an amount of rights set by the user of the accessible terminal 200.

As described above, the rights sharing system for DRM, according to an exemplary embodiment of the present invention, can allow the inaccessible terminal 100 to share a license stored in the accessible terminal 200 according to a license sharing request or a sublicense request of the inaccessible terminal 100 or can divide the license rights to certain amounts so that the terminals can be used. Therefore, the system can allow the inaccessible terminal 100, which cannot directly access the RI server 400, to play back DRM content.

In the following description, the rights sharing method for DRM, according to an exemplary embodiment of the present invention, is explained in with reference to the drawings.

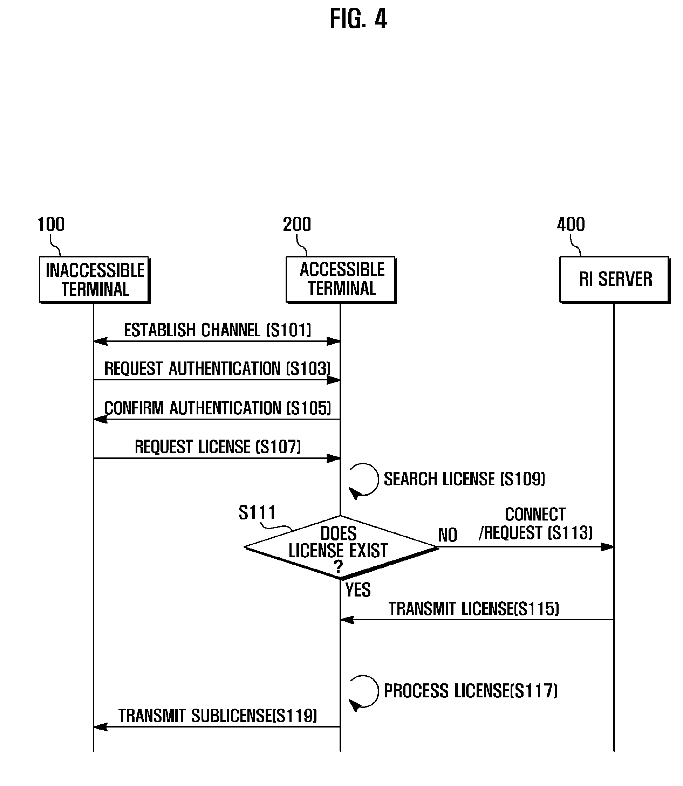

FIG. 4 is a signal flowchart describing communication between elements in a rights sharing system for DRM, according to an exemplary embodiment of the present invention. In the following description, it is assumed that a channel for sharing a license has been established between the inaccessible terminal 100 and the accessible terminal 200.

Referring to FIG. 4, a short-range communication channel is established between the inaccessible terminal 100 and the accessible terminal 200 in step S101. The communication channel may be established by any one of Bluetooth communication, Zigbee communication, ultra wide band (UWB) communication, InfraRed (IR) communication, direct communication using a wire, etc.

After establishing the communication channel, the inaccessible terminal 100 requests an authentication from the accessible terminal 200 in step S103. That is, the inaccessible terminal 100 transmits authentication information, for example, information including a password, an ID, etc., to the accessible terminal 200 through the 1^{st} authentication module. The accessible terminal 200 identifies the validity of the authentication information. When the authentication information is valid, the accessible terminal 200 transmits a message for authentication confirmation to the inaccessible terminal 100 in step S105. The validity test for authentication information is performed by determining whether the received authentication information is valid with respect to the previously stored information. This validity test for authentication information may be a process to determine whether the inaccessible terminal 100 can request a license sharing service from the accessible terminal 200.

After confirming the authentication information, the inaccessible terminal 100 requests a license for playing back a particular DRM content (DRM_MO) from the accessible terminal 200 in step S107. The inaccessible terminal 100 may request a license for playing back DRM content (DRM_MO), i.e., a sublicense from the accessible terminal 200. The sublicense may be information that includes a key value for playing back a DRM content (DRM_MO) and license rights update information for updating a license according to the playback of the DRM content (DRM_MO). The license rights update information can be set in such a way that the inaccessible terminal 100 requests an amount of license rights from the accessible terminal 200 at a time when the inaccessible terminal 100 requests a license from the accessible terminal 200 or a user sets an amount of license rights.

When the accessible terminal 200 receives the license request, it searches for the license from the memory in step S109 and determines whether the license is stored in the memory in step S111. When the accessible terminal 200 ascertains that the requested license is not stored in the memory at step S111, it accesses the RI server 400 and requests a corresponding license therefrom in step S113. The accessible terminal 200 receives a corresponding license from the RI server 400 in step S115. After that the accessible terminal 200 processes the received license in step S117, i.e., it generates a sublicense described above based on the received license. However, if the accessible terminal 200 ascertains that the requested license is stored in the memory at step S111, the procedure branches to step S117, wherein the accessible terminal 200 generates a sublicense. Next, the accessible terminal 200 transmits the sublicense to the inaccessible terminal 100 in step S119.

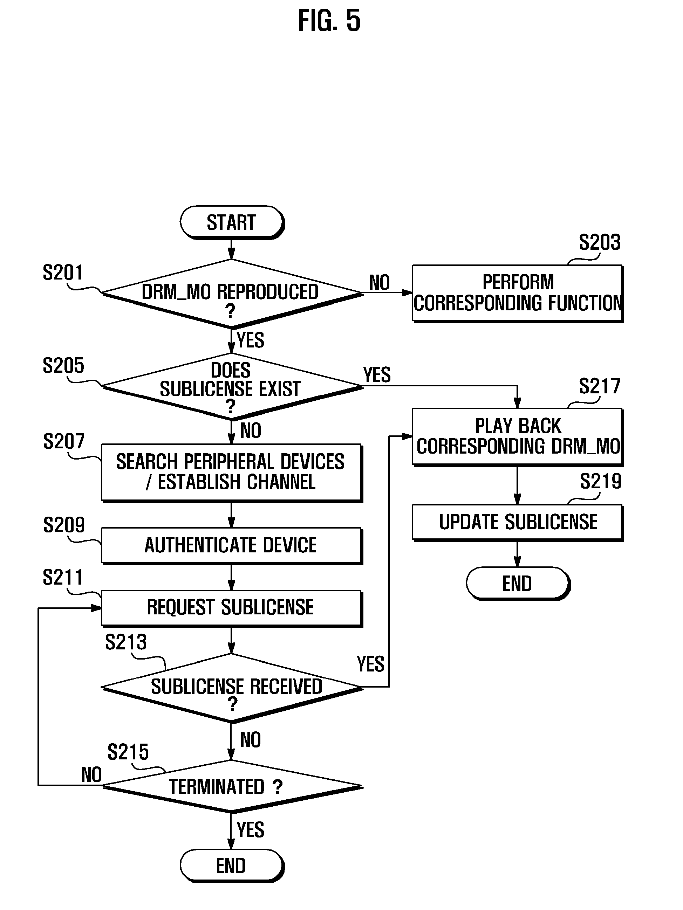

FIG. 5 is a flowchart describing operations of an inaccessible terminal, according to an exemplary embodiment of the present invention. The operation of the inaccessible terminal 100 is explained based on a sublicense that includes a key value for playing back DRM content (DRM_MO) and license update information according to the playback of the DRM content (DRM_MO).

Referring to FIG. 5, the 1^{st} controller 160 determines whether the playback of the DRM content (DRM_MO) is requested in step S201. If the playback is not requested at step S201, the inaccessible terminal 100 performs corresponding functions in step S203, for example, a standby operation, an operation for displaying a playback file name and playback file information, etc. The determination of step S201 may be performed as the DRM content (DRM_MO), generated by the 1^{st} input unit 120 and stored in the 1^{st} memory 150, is selected and requested to be played back.

On the other hand, when a request for playing back a DRM content (DRM_MO) is generated at step S201, the 1^{st} controller 160 may determine whether a sublicense for playing back a DRM content (DRM_MO) is stored in the 1^{st} memory 150 in step S205. When a sublicense is not stored in the 1^{st} memory 150 at step S205, the 1^{st} rights sharing management unit of the 1^{st} controller 160 searches for peripheral devices using the 1^{st} short-range communication module 110 and establishes a channel with the accessible terminal 200 of the searched devices in step S207. The inaccessible terminal 100 searches for peripheral devices to establish a channel with the accessible terminal 200 and then displays the searched peripheral devices on the list at step S207. The user of the inaccessible terminal 100 can select an accessible terminal on the list, so that the inaccessible terminal 100 establishes a channel with the selected accessible terminal.

The 1^{st} authentication module of the 1^{st} controller 160 then performs an authentication process with respect to the accessible terminal 200 in step S209. To this end, the 1^{st} authentication module transmits authentication information to the accessible terminal 200 and receives an authentication confirmation message for the authentication information therefrom. After completing authentication at step S209, the inaccessible terminal 100 requests a sublicense from the accessible terminal 200 in step S211. The inaccessible terminal 100 then determines whether a sublicense is received from the accessible terminal 200 in step S213. When a sublicense is not received at step S213, the inaccessible terminal 100 determines whether to terminate the procedure in step S215. When the procedure is not terminated at step S215, it returns to step S211. In contrast, when the inaccessible terminal 100 receives a sublicense at step S213, it plays back a corresponding DRM content (DRM_MO) in step S217. Meanwhile, when a sublicense is stored in the 1^{st} memory 150 at step S205, the inaccessible terminal 100 plays back a corresponding DRM content (DRM_MO) at step S217.

If license update information is generated according to the playback of the DRM content (DRM_MO) at step S217, the inaccessible terminal 100 updates a sublicense in step S219. That is, the inaccessible terminal 100 can update rights information for a sublicense stored in the sub DB. When the right for a sublicense has been expired by updating operations, the inaccessible terminal 100 controls so as not to play back a corresponding DRM content (DRM_MO) using the key value or deletes the key value.

As described above, the inaccessible terminal 100 of an exemplary embodiment of the present invention is operated in such a way as to determine whether to store a license for playing back a DRM content (DRM_MO) therein, request, if it does not have the license, a corresponding license from other terminals having the license, and play back a DRM content (DRM_MO). Since the inaccessible terminal 100 manages a sublicense that includes a key value for playing back a DRM content (DRM_MO) and license update information, it does not need a DRM agent, etc.

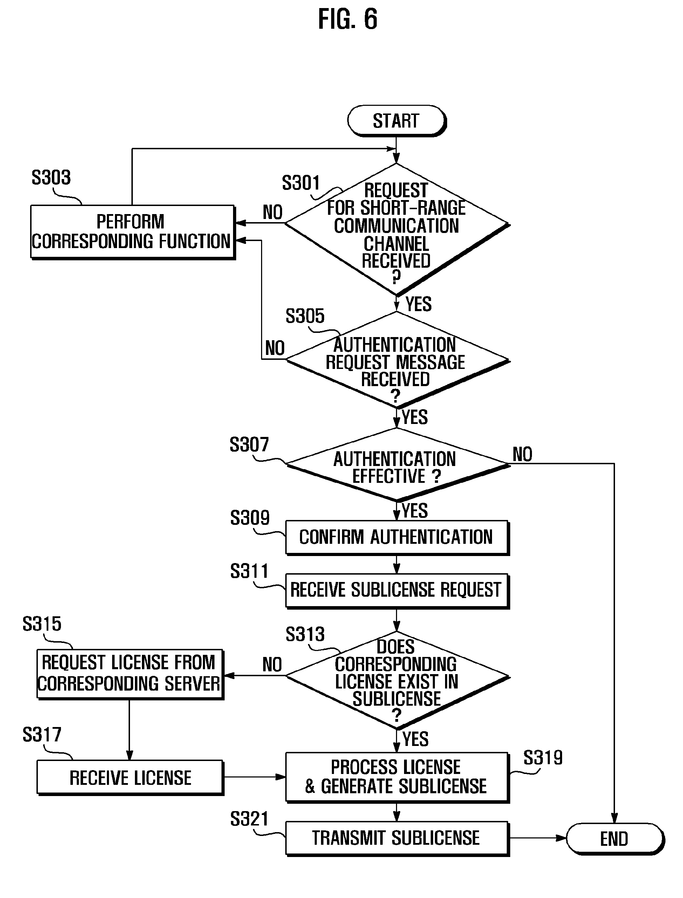

FIG. 6 is a flowchart describing operations of an accessible terminal, according to an exemplary embodiment of the present invention. It is assumed that the accessible terminal establishes a short-range communication channel to share a license. It should be understood that the present invention is not limited to the illustrated exemplary embodiment. For example, the accessible terminal may perform data communication, controlling other terminals, etc. through the short-range communication channel.

Referring to FIG. 6, the 2^{nd} controller 260 determines whether a request for establishing a short-range communication channel occurs in step S301. If a channel establishment request does not occur at step S301, the 2^{nd} controller 260 performs corresponding functions of the accessible terminal 200 in step S303, for example, a standby operation, a call operation, a camera function, an audio sound collecting function, etc. On the contrary, when a channel establishment request occurs at step S301, the accessible terminal 200 determines whether to receive an authentication request message using the 2^{nd} authentication module in step S305. If an authentication request message is not received at step S305, the 2^{nd} controller 260 performs corresponding functions of the accessible terminal 200 at step S303. If an authentication request message is received at step S305, the 2^{nd} authentication module of the 2^{nd} controller 260 determines whether authentication information included in the received authentication request message is valid in step S307. If authentication information is valid at step S307, the 2^{nd} authentication module generates an authentication confirmation message corresponding to the valid authentication information and transmits it to the inaccessible terminal 100 in step S309. When the accessible terminal 200 receives a sublicense request from the inaccessible terminal 100 in step S311, the 2^{nd} rights sharing management unit of the 2^{nd} controller 260 determines whether a license corresponding to the received sublicense is stored in the 2^{nd} memory 250 in step S313. When a corresponding license is not stored in the 2^{nd} memory 250 at step S313, the 2^{nd} rights sharing management unit requests the corresponding license from a corresponding server in step S315 and then receives it therefrom in step S317. After that, the 2^{nd} rights sharing management unit processes the received license using the rights management module and generates a sublicense in step S319. On the other hand, when a corresponding license is stored in the 2^{nd} memory 250 at step S313, the 2^{nd} rights sharing management unit generates a sublicense in step S319. The 2^{nd} rights sharing management unit transmits the sublicense, generated at step S319, to the inaccessible terminal 100 in step S321.

In addition, if authentication information is not valid at step S307, the 2^{nd} authentication module terminates the license sharing request of the inaccessible terminal 100.

As described above, the accessible terminal 200 of an exemplary embodiment of the present invention can generate a sublicense based on the stored license and transmit it to the inaccessible terminal 100. If the accessible terminal 200 does not have a license, it can receive a corresponding license from a corresponding server and generate a sublicense.

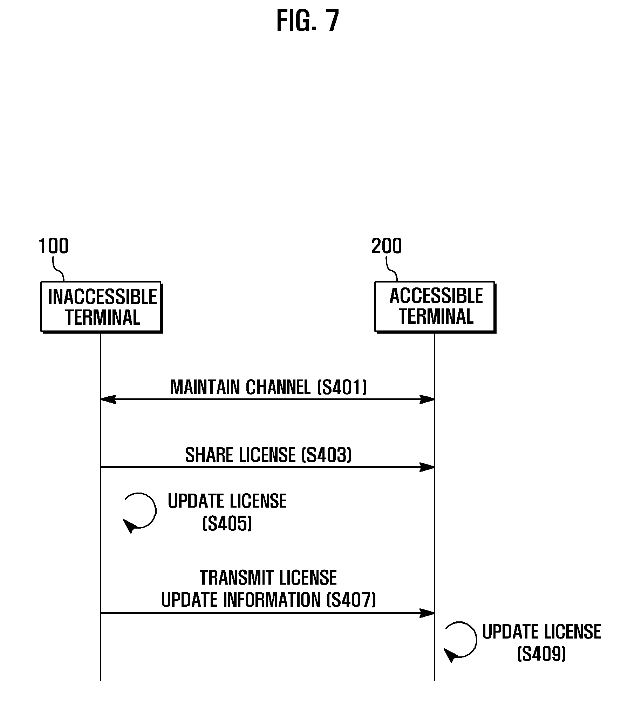

FIG. 7 is a signal flowchart describing a license update process in a rights sharing system, according to an exemplary embodiment of the present invention.

Referring to FIG. 7, a channel has been established between the inaccessible terminal 100 and the accessible terminal 200 and is maintained in step S401. That is, a short-range communication channel has been established between the 1^{st} short-range communication module of the inaccessible terminal 100 and the 2^{nd} short-range communication module of the accessible terminal 200. Under the channel establishment, the inaccessible terminal 100 receives a key value for playing back a DRM content (DRM_MO) from the accessible terminal 200 and shares it therewith in step S403. The inaccessible terminal 100 can play back the DRM content (DRM_MO) using the key value.

As the inaccessible terminal 100 plays back the DRM content (DRM_MO), a license should be updated. A license update event occurs during the playback of the DRM content (DRM_MO) or at the time the playback of DRM content (DRM_MO) has been terminated. A license update event may also occur when a DRM playback module for playing back a DRM content (DRM_MO) is terminated. When the playback of a DRM content (DRM_MO) is terminated or the DRM playback module is terminated, it is preferable that the key value transmitted to the inaccessible terminal 100 is deleted.

When a license update event occurs at step S405, the inaccessible terminal 100 transmits a message for updating a license to the accessible terminal 200 in step S407) The accessible terminal 200 updates the license stored in the main DB based on the received message for license update in step S409.

As described above, since an additional sublicense for the inaccessible terminal 100 is not generated but instead a communication channel with the inaccessible terminal 100 is maintained in the license update process of an exemplary embodiment of the present invention, the license can be updated in real time in the inaccessible terminal 100, as the DRM content (DRM_MO) is played back.

As described above, the rights sharing system and method for digital rights management (DRM) enables an inaccessible terminal, which cannot access a content providing server, to share a license with other terminals to thus play back the DRM content.

While the present invention has been shown and described with reference to certain exemplary embodiments thereof, it will be understood by those skilled in the art that various changes in form and details may be made therein without departing from the spirit and scope of the present invention as defined by the appended claims and their equivalents.

## Claims

1. A rights sharing method for digital rights management (DRM) that plays back a DRM content in an inaccessible terminal that cannot directly access a content providing server that provides a license, the method comprising:
generating a playback request of DRM content;
determining whether a key value for playing back the DRM content is stored;
establishing a communication channel with a terminal using a short-range communication module, if the key value is not stored;
requesting a key value corresponding to the DRM content from the terminal; and
playing back the DRM content using the key value received from the terminal.

2. The method of claim 1, further comprising at lease one of the following steps of:
transmitting license update information, generated as the DRM content are played back, to the terminal and updating a license according the license update information in the terminal;
deleting the key value, if the playback of the DRM content is terminated;
accessing, if the license is not stored therein, the content providing server by the terminal, requesting a corresponding license from the content providing server, and receiving the corresponding license therefrom; and
confirming, after the communication channel is established between the inaccessible terminal and the terminal, authentication therebetween, determining whether a license corresponding to the DRM content is stored in the terminal, decoding, if the license is not stored, the license to extract a key value, and transmitting the key value to the inaccessible terminal.

3. The method of claim 2, further comprising:
maintaining a communication channel between the inaccessible terminal and the terminal,
wherein the license update information is transmitted to the terminal in real time.

4. A rights sharing method for digital rights management (DRM), the method comprising:
generating a request for playing back a DRM content;
determining whether a sublicense is stored, the sublicense including a key value for playing back the DRM content and license update information corresponding to a key value;
establishing, if the sublicense is not stored, a communication channel with a terminal using a short-range communication module;
requesting a sublicense corresponding to the DRM content from the terminal; and
playing back the DRM content using a key value included in the sublicense received from the terminal.

5. The method of claim 4, further comprising at least one of the following steps of:
applying, if license update information according to playback of the DRM content is generated, the license update information to the sublicense and updating license rights;
accessing, if the license is not stored, the content providing server by the terminal, requesting a corresponding license from the content providing server, and receiving the corresponding license therefrom; and
determining whether a license corresponding to the sublicense is stored in the terminal, decoding, if the license is stored, the corresponding license to extract a key value, setting an amount of license rights for the generated key value, generating a sublicense including the key value and the license rights, and transmitting the sublicense to the inaccessible terminal.

6. The method of claim 4, wherein the requesting of the sublicense corresponding to the DRM content from the terminal, further comprises at least one of the following steps of:
setting an amount of license rights for the key value and transmitting a sublicense request message including the set amount of license rights to the terminal; and
determining whether a license corresponding to the sublicense is stored in the terminal, decoding, if the license is stored, the corresponding license to extract a key value, setting an amount of license rights for the generated key value according to an amount of license rights set by the inaccessible terminal, generating a sublicense including the key value and the license rights, and transmitting the sublicense to the inaccessible terminal.

7. A rights sharing system for digital rights management (DRM), the system comprising:
an inaccessible terminal that cannot directly access a content providing server, which provides a license, for storing a DRM content and a playback module used for playing back the DRM content; and
an terminal for decoding a license corresponding to the DRM content that the inaccessible terminal intended to play back, for extracting a key value for playing back the DRM content, and for transmitting the extracted key value to the inaccessible terminal,
wherein the inaccessible terminal receives the key value from the terminal and plays back the DRM content.

8. The system of claim 7, wherein the inaccessible terminal comprises:
a 1^{st} short-range communication module for establishing a communication channel with the terminal;
a 1^{st} authentication module for confirming authentication with respect to the terminal;
a decoding module for playing back the DRM content using the key value;
a 1^{st} memory for storing at least one of the DRM content and the playback module;
a 1^{st} input unit for generating input signals for at least one of selection and playback of the DRM content; and
a 1^{st} rights sharing management unit for managing the key value.

9. The system of claim 8, wherein the 1^{st} rights sharing management unit deletes the key value when the playback of the DRM content is terminated.

10. The system of claim 8, wherein the 1^{st} rights sharing management unit transmits license update information to the terminal, if the license update information according to the playback of the DRM content is generated.

11. The system of claim 8, wherein the terminal comprises:
a 2^{nd} short-range communication module for establishing a communication channel with the 1^{st} short-range communication module;
a 2^{nd} memory for storing a license for the playback of the DRM content;
a 2^{nd} rights sharing management unit for managing the license share; and
an RF unit for receiving the license from the content providing server, if a license, which corresponds to DRM content intended to be played back in the inaccessible terminal, is not stored in the 2^{nd} memory.

12. The system of claim 8, wherein the terminal decodes a license corresponding to the DRM content that the inaccessible terminal desired to play back, extracts a key value for playing back the DRM content, sets license rights for the key value, generates a sublicense including the key value and the license rights, and transmits the sublicense to the inaccessible terminal.

13. The system of claim 12, wherein the 1^{st} rights sharing management unit updates license rights included in the sublicense, if the license update information according to the playback of the DRM content is generated.

14. The system of claim 12, wherein the 1^{st} rights sharing management unit sets an amount of license rights for the key value, generates a sublicense request message including the set amount of license rights, and transmits the message to the terminal.

15. The system of claim 12, wherein the terminal comprises:
a 2^{nd} short-range communication module for establishing a communication channel with the 1^{st} short-range communication module;
a 2^{nd} memory for storing a license for the playback of the DRM content;
a 2^{nd} rights sharing management unit for managing the license share; and
an RF unit for accessing the content providing server,
wherein, if a license, which corresponds to DRM content intended to be played back in the inaccessible terminal, is not stored in the 2^{nd} memory, the 2^{nd} rights sharing management unit controls the RF unit to access the content providing server and requests a corresponding license from the content providing server to receives it.
